# EUROPÄISCHE PATENTANMELDUNG

(11) **EP 0 943 652 A2**
(43) Veröffentlichungstag der Anmeldung: **22.09.1999**
(21) Anmeldenummer: 99104431.4
(22) Anmeldetag: 22.11.1996
(51) Int. Cl.: C08K 5/15, C08L 69/00

(54) **Neue Compact Disc - Compounds**

(30) Priorität: 05.12.1995 DE 19545330
(62) Teilanmeldung aus: 96118753.1
(71) Anmelder: BAYER AG, 51368 Leverkusen (DE)
(72) Erfinder: Kaufmann, Ralf, Dr., 47228 Duisburg (DE); Ebert, Wolfgang, Dr., 47800 Krefeld (DE); Löwer, Hartmut, Dr., 47802 Krefeld (DE); Kadelka, Jürgen, Dr., 47829 Krefeld (DE); Wulff, Claus, Dr., 47800 Krefeld (DE); Zaby, Gottfried, Dr., 51375 Leverkusen (DE)

(57) **Zusammenfassung**

Gegenstand der vorliegenden Erfindung sind Compact Discs enthaltend ein oder mehrere cyclische Carbonate und thermoplastische Polycarbonate.

## Beschreibung

Gegenstand der vorliegenden Erfindung sind Compact Disc enthaltend thermoplastischem Polycarbonat die ein oder mehrere cyclische Carbonate von aliphatischen Polyalkoholen, deren übrige OH-Gruppen ganz oder teilweise, vorzugsweise ganz, mit aliphatischem C₁-C₃₂-Carbonsäuren oder mit Benzoesäure, bevorzugt mit C₄-C₂₆-Fettsäuren, verestert sind, als Entformungsmittel für thermoplastische Polycarbonate in Mengen von 0,01 Gew.-% bis 10 Gew.-%, vorzugsweise von 0,01 Gew.-% bis 3 Gew.-%, bezogen auf 100 Gew.-% der Summe aus Entformungsmittel und thermoplastischem Polycarbonat.

Aliphatische Polyalkohole sind solche mit 3 bis 8 C-Atomen und 3 bis 6 OH-Gruppen, vorzugsweise mit 3 oder 4 OH-Gruppen.

Der Zusatz von Teilestern zu Polycarbonaten ist beispielsweise aus den folgenden Literaturstellen bekannt:

US-PS 3 186 961 beschreibt den Zusatz von Teilestern zu Polycarbonaten in Mengen von 5 bis 200 Teilen pro 100 Teile Polycarbonat als Weichmacher.

Sho-45-24 439 beschreibt den Zusatz von Teilestern zu Polycarbonaten in Mengen von 0,05 bis 5 % zum Zwecke der Entformung.

Jp-72-45 934 beschreibt antistatisch ausgerüstete Polycarbonate mit 0,1 bis 5 Gew.-% Fettsäuremonoglyceriden.

Sho-47-98 136 beschreibt den Zusatz von Glycerinestern von Hydroxyfettsäuren zu Polycarbonaten als Entformungsmittel.

Die DE-OS 27 01 725 (Le A 17 784) beschreibt den Zusatz von Teilestern spezieller Alkohole zu Polycarbonaten zum Zwecke der Entformung.

Sho-60-81 245 beschreibt den Zusatz von Teilestern zu chlorarmen Polycarbonaten, um die Korrosion der Werkzeuge zu verhindern.

Sho-60-113201 beschreibt Formkörper für die Optik aus Polycarbonaten, die Fettsäuremonoglyceride enthalten. (Siehe auch EP-0 417 775).

EP 0 213 413 beschreibt den Zusatz von Teilestern zu Polycarbonaten für optische Zwecke.

Hei-2-225 558 beschreibt Polycarbonatplatten, die Teilester von Polyolen und aliphatischen Monocarbonsäuren enthalten.

Die japanische Patentanmeldung 90-12 510 vom 24.1.1990 beschreibt Substrate für CD's, die aus Polycarbonat bestehen und 0,002 bis 5 % Fettsäuremonoglyceride enthalten.

Die japanische Paptentanmeldung No. 90-294 979 vom 31.10.1990 beschreibt Polycarbonate für optische Scheiben, die 0,06 bis 0,09 % Glycerinmonostearat enthalten.

EP 0 511 640 beschreibt ebenfalls den Zusatz von Teilestern zu Polycarbonaten für optische Zwecke.

Schließlich sind aus DE-A-41 17 655 bzw. dem US-Patent 5 246 999 ebenfalls Polycarbonate mit OH-gruppenhaltigen Fettsäureestern bekannt.

Alle diese OH-gruppenhaltigen Fettsäureester haben den Nachteil, daß die OH-Gruppen-haltigen Additive zu Umesterungen mit dem Polycarbonat führen können. Dadurch entstehen phenolische OH-Gruppen, die zu thermischer und oxydativer Empfindlichkeit des Materials führen.

Es zeigt sich dabei außerdem, daß bei der Einarbeitung von Fettsäuremonoglyceriden in die thermoplastischen Polycarbonate etwa gemäß Jp-72-45 934 cyclische Carbonate der entsprechenden Fettsäuremonoglyceride gebildet werden.

Dieser Befund nimmt jedoch unseres Erachtens den Gegenstand der vorliegenden Erfindung nicht vorweg; er legt ihn auch nicht nahe.

Dagegen ist der direkte Zusatz der cyclischen Carbonate zu thermoplastischen Polycarbonaten in der Literatur bislang nicht gefunden worden.

Bekannt ist auch das Entformungsverhalten von Polycarbonaten durch den Zusatz von Fettsäureestern von vollständig veresterten Polyalkoholen zu verbessern (siehe beispielsweise DE-OS 25 07 748 (Le A 16 284). Diese Zusätze haben aber den Nachteil, daß sie aufgrund des hohen Aliphatenanteils zu Formenbelägen führen können

Bekannt ist auch aus der EP-0 420 279, daß für optische Datenträger Polycarbonate mit einem Gehalt an Fettsäureestern eingesetzt werden, die keine oder nur sehr wenig OH-Gruppen enthalten (siehe Seite 3, Zeilen 19 bis 31 der EP-0 420 279 A2). Derartige optische Datenträger haben die vorstehend genannten Nachteile.

Aus der DE-OS 42 27 999 (Le A 29 135) sind transparente, leichtfließende Polycarbonatmischungen aus aromatischen Polycarbonaten und aliphatischen Polycarbonaten bekannt. Derartige Mischungen sind jedoch in der Regel aufgrund des Syntheseweges zu aliphatischen Polycarbonaten, katalysatorhaltig. Wegen dieser Umesterungskatalysatoren findet auch mit dem aromatischen Polycarbonat Umesterung statt.

Alle bislang bekannten Additivsysteme haben somit gewisse Nachteile als Entformungsmittel für Polycarbonatformmassen, so daß sie sich für die Weiterverarbeitung zu optischen Datenträgern, insbesondere zur Herstellung von Compact Disks, wenig oder gar nicht eignen.

Die Aufgabe bestand daher darin, ein Entformungsmittel für Polycarbonate zu entwickeln, das unter Herstellungs- und Verarbeitungsbedingungen besonders bei der Herstellung von Compact Discs, wenig oder gar nicht zur Umesterung neigt, eine gute Entformungswirkung hat, und so zu einer verbesserten Pitabformung und einer größeren Datensicherheit bei Compact Discs führt. Durch die erfindungsgemäße Verwendung der cyclischen Carbonate wird dies erreicht.

Gegenstand der vorliegenden Anmeldung ist demnach eine Compact Disc enthaltend thermoplastischem Polycarbonat und ein oder mehrere cyclische Carbonate von aliphatischen Polyalkoholen, deren übrige OH-Gruppen ganz oder teilweise, mit aliphatischen C₁-C₃₂-Carbonsäuren oder mit Benzoesäure verestert sind, in Mengen von 0,01 Gew.-% bis 10 Gew.-%.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die Herstellung dieser Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher sind sowohl Monophenole als auch Monocarbonsäuren.

Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol sowie deren Mischungen.

Geeignete Monocarbonsäuren sind Benzoesäure, Alkylbenzoesäuren und Halogenbenzoesäuren.

Bevorzugte Kettenabbrecher sind die Phenole der Formel (I) 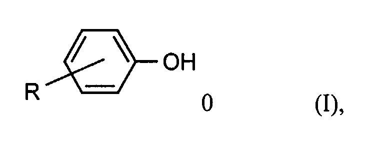 worin
- R: H, tert.-Butyl oder ein verzweigter oder unverzeigter C₈- und/oder C₉-Alkylrest ist.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methyl-phenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4''-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden. Im Falle des Umesterungsverfahrens werden die Verzweiger zusammen mit den Diphenolen eingesetzt.

Alle diese Maßnahmen zur Herstellung der thermoplastischen Polycarbonate sind dem Fachmann geläufig.

Erfindungsgemäße einsetzbare cyclische Carbonate sind 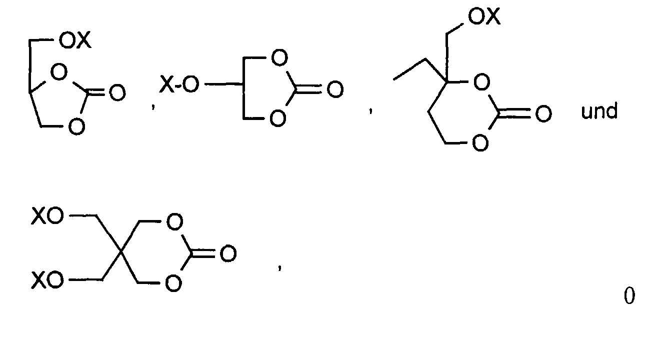 worin
- X: ein aliphatischer Acylrest mit 1 bis 32 C-Atomen, vorzugsweise mit 1 bis 26 C-Atomen oder der Benzoylrest ist.

Besonders bevorzugte Reste X sind Fettsäureesterreste mit 4 bis 26 C-Atomen.

Ganz besonders bevorzugt sind C₅-C₂₅-Fettsäuren, äußerst bevorzugt C₈-C₂₂-Fettsäuren. Der Fachmann findet die besten Eigenschaften bei C₁₂-C₂₂-Fettsäuren und ganz besonders bei C₁₆-C₂₀-Fettsäuren.

Beispiele für X sind Benzoyl, Acetyl, Propionyl, Butyoryl sowie Reste der Myristinsäure, der Palmitinsäure oder Stearinsäure, der Arachinsäure und der Behensäure.

Die cyclischen Carbonate können sowohl allein als auch im Gemisch von zwei oder mehr eingesetzt werden.

Die erfindungsgemäß einzusetzenden Carbonate sind entweder literaturbekannt oder nach literaturbekanntem Verfahren erhältlich.

(Siehe Journal of Organic Chemistry, V 35 (1970) Seiten 221 ff).

Den erfindungsgemäß zu entformenden thermoplastischen Polycarbonaten können noch für Polycarbonate übliche Zusätze in den bekannten Mengen zugesetzt sein, beispielsweise Stabilisatoren gegen Wärme, Feuchtigkeit und UV-Strahlung, wie organische Phosphite, gegebenenfalls in Kombination mit monomeren oder polymeren Epoxiden, Phosphatestern, N-haltige Heterocyclen wie Triazole bzw. Benztriazole, außerdem Flammschutzmittel wie aliphatische oder aromatische oder perfluorierte aliphatische Alkali- oder Erdalkalisulfonate, Farbstoffe und Antistatika, vorausgesetzt, daß diese Zusätze die Transparenz der Polycarbonate nicht zu sehr einschränken.

Der Zusatz der cyclischen Carbonate zu den thermoplastischen Polycarbonaten kann beispielsweise erfolgen, indem man die cyclischen Carabonate während der Aufarbeitung der Polymerlösung der thermoplastischen Polycarbonate zusetzt oder der Schmelze der thermoplastischen Polycarbonate einverleibt; vorzugsweise erfolgt der Zusatz über die Compoundierung des fertigen, thermoplastischen Polycarbonats.

Die üblichen, für Polycarbonate bekannten Zusätze können in bekannter Weise entweder vor dem Zusatz der cyclischen Carbonate mit dem Zusatz der cyclischen Carbonate oder nach dem Zusatz der cyclischen Carbonate den Polycarbonaten einverleibt werden.

Die erfindungsgemäßen leicht entformbaren Polycarbonate können in der für Polycarbonate bekannten Weise zu Compact Discs weiterverarbeitet.

Diese Verarbeitung kann als separater Schritt aus den fertig hergestellten, leicht entformbaren Polycarbonaten, die beispielsweise als Granulat anfallen, erfolgen. Die Verarbeitung kann aber auch im Zuge der Einarbeitung der cyclischen Carbonate und/oder der üblichen Zusätze sogleich miterfolgen.

### Beispiele

1. Herstellung der Compounds
Die Einarbeitung der Additive erfolgt über Einkompoundierung. Dazu wird die erforderliche Menge Additiv mit vorgetrocknetem Polycarbonat-Granulat in einem Taumelmischer vermischt und anschließend bei 240°C über einen Zweiwellenextruder vom Typ WP ZSK 32 reextrudiert.
2. Herstellung der Compact Discs
Die zur Versuchsdurchführung erforderlichen CD's wurden auf einer Spritzgußmaschine der Fa. Netstal mit 90 t Schließkraft mit einem CD-Werkzeug der Fa. ICT Axxicon, Typ HCA hergestellt. Die Massetemperatur betrug 310°C, die Werkzeugtemperatur 65°C und die eingestellte Zykluszeit 4,7 sek.
3. Hergestellte Produkte
Als Basismaterial wurde ein Polycarbonat mit p-tert. Butylphenol als Kettenabbrecher und einer relativen Lösungsviskosität von 1,200 verwendet.
3.1. Erfindungsgemäßes Produkt A:
   Nach oben beschriebenem Verfahren wurden 0,1 % Glycerinmonostearatcarbonat eincompoundiert.
3.2. Vergleichsbeispiel B:
   Nach oben beschriebenem Verfahren wurden 0,25 % Pentaerythrittetrastearat (Standardentformungsmittel für Polycarbonat) eincompoundiert.
3.3. Vergleichsbeispiel C:
   Das Basismaterial ohne Additiv wurde als Vergleichsbeispiel C eingesetzt.

4. Prüfungen
Es wurden an den Granulatmischungen und daraus hergestellten CD's folgende Untersuchungen durchgeführt:
4.1. Schmelzestabilität bei Feuchtverarbeitung
   Hierzu wurde Granulat der entsprechenden Mischung ohne Vortrocknung für 5 Minuten in einem Rheometer aufgeheizt und anschließend, wie zur Schmelzviskositätsmessung üblich, ein Schmelzestrang ausgepresst. An diesem Schmelzestrang wurde anschließend die relative Lösungsviskosität bestimmt. Als Messgröße dient der Abfall der relativen Lösungsviskosität vor und nach der Temperung. Die Lösungsviskosität wurde gemessen in Anlehnung an DIN 51 562 T.3.
4.2. Pitabformung / HF-Signal
   Ein wesentliches Qualitätskriterium für Compact Discs ist die Güte, mit der die die Information tragende Oberflächenstruktur (Pits) abgebildet wird. Ein Maß für die Güte der Pitabformung ist das sogenannte High Frequency Signal (HF) (I11). Dieses Signal wurde mit Hilfe des CD-Testers der Fa. ISEDD, Bielefeld, bestimmt.
4.3. Wolkenbildung
   Weiteres Qualitätsmerkmal für Compact Discs sind visuell sichtbare Oberflächenstörungen, die sich in Form von dunklen Flecken, federartigen Strukturen oder Linien bemerkbar machen. Diese Defekte entstehen durch Deformationen der Oberfläche während des Entformens der CD aus dem Spritzgußwerkzeug und sind demzufolge unmittelbar ein Indikator für die Qualität des eingesetzten Entformungsmittels. Die Häufigkeit und Schwere der Wolkenbildung wird visuell beurteilt und in 4 Katergorien (1: keine, 2: kaum sichtbar, 3: gut sichtbar, 4: schwer) eingeteilt.

5. Messergebnisse
Die Messergebnisse sind in folgender Tabelle zusammengefasst:

| Nr. | Prüfung | Einheit | Beispiel A | Beispiel B | Beispiel C |
|---|---|---|---|---|---|
| 4.1 | Schmelzestabilität bei Feuchtverarbeitung | delta eta rel. | 0,001 | 0,025 | 0,001 |
| 4.2 | Pitabformung / H-F Signal | % | 70 | 62 | 70 |
| 4.3 | Wolkenbildung | Kategorie | 1-2 | 3 | 4 |

### Herstellung von Glycerinmonostearatcarbonat

36 g (0.1 mol) Glycerinmonostearat werden in einer Mischung aus 500 ml Dichlormethan, 200 ml Chlorbenzol und 28 g Pyridin (0.35 mol) bei Raumtemperatur unter Stickstoff-Beschleierung gelöst. Anschließend werden 0.15 mol Phosgen eingeleitet und in Stickstoffstrom bei Raumtemperatur gerührt bis der Ansatz phosgenfrei ist. Bei 5°C wird dann mit 5 %ziger Salzsäure angesäuert, die organische Phase abgetrennt und bis zur Elektrolytfreiheit mit Wasser gewaschen. Danach wird die organische Phase getrocknet und im Wasserstrahlvakuum eingeengt.

Man erhält ein Carbonat mit <1 ppm verseifbarem Chlor und einer Rest-OH-Zahl von 6 ppm.

Ausbeute: 34.3 g (88.8 %)

Nach Umkristallisieren in Aceton-Hexan-Gemisch (1:5) sinkt der OH-Wert auf <2.

## Patentansprüche

1. Compact Disc enthaltend thermoplastisches Polycarbonat, dadurch gekennzeichnet, daß ein oder mehrere cyclische Carbonate von aliphatischen Polyalkoholen, deren übrige OH-Gruppen ganz oder teilweise, mit aliphatischen C₁-C₃₂-Carbonsäuren oder mit Benzoesäure verestert sind und in Mengen von 0,01 Gew.-% bis 10 Gew.-% enthalten sind.

2. Compact Disc nach Anspruch 1, dadurch gekennzeichnet, daß die übrigen OH-Gruppen des cyclischen Carbonats ganz verestert sind.

3. Compact Disc nach Anspruch 1 und/oder 2, dadurch gekennzeichnet, daß die übrigen OH-Gruppen ganz oder teilweise mit C₅-C₂₅-Fettsäuren, bevorzugt C₈-C₂₂-Fettsäuren, besonders bevorzugt C₁₂-C₂₂-Fettsäuren und ganz besonders bevorzugt C₁₆-C₂₀-Fettsäuren verestert sind.

4. Compact Disc nach mindestens einem der Ansprüche 1 bis 3, dadurch gekennzeichnet, daß die cyclischen Carbonate in Mengen von 0,01 Gew.-% bis 3 Gew.-% eingesetzt werden.
